# EUROPEAN PATENT SPECIFICATION

(11) **EP 1 461 379 B1**
(45) Date of publication and mention of the grant of the patent: **03.07.2013**
(21) Application number: 02718866.3
(22) Date of filing: 22.01.2002
(51) Int. Cl.: C08J 11/00, C08G 63/78, C08G 63/02, C08G 63/183

(54) **CONTINUOUS PRODUCTION OF TRANPARENT POLYESTER USING WASTE**
KONTINUIERLICHE HERSTELLUNG VON TRANSPARENTEM POLYESTER UNTER VERWENDUNG VON ABFALL
PRODUCTION EN CONTINU DE POLYESTER TRANSPARENT A PARTIR DE DECHETS

(30) Priority: 17.12.2001 US 23629
(43) Date of publication of application: 29.09.2004
(73) Proprietor: Invista Technologies S.à.r.l., 9000 St. Gallen (CH)
(72) Inventor: SCANTLEBURY, Geoffrey, R., Charlotte, NC 28226 (US); FIKE, Lawrence, Robert, Moore, SC 29369 (US); STEINER, Thomas, Lee, Greenville, SC 29615 (US)
(74) Representative: Schweitzer, Klaus
(86) International application number: PCT/US2002/001965
(87) International publication number: WO 2003/051970

(56) References cited:
- WO-A-98/41375
- JP-A- 10 310 637
- US-A- 5 298 530
- US-A- 5 298 530
- US-A- 5 597 852
- US-A- 6 096 838

## Description

The present invention is a continuation-in-part of U.S. Patent application U.S.S.N.10/023,629 titled PRODUCTION OF TRANSPARENT POLYESTER USING WASTE filed December 17, 2001 by the same inventors and assignee.

### BACKGROUND OF THE INVENTION

### 1) Field of the Invention

The present invention relates to a process for making polyester containing transparent polyester waste suitable for food grade applications by a novel equilibrium depolymerization process ("EDP"). In particular, the present invention relates to EDP in which transparent waste polyester is depolymerized in an esterifier and repolymerized with virgin polyester. In the equilibrium depolymerization process transparent waste polyester is extruded into a reactor containing a prepolyester oligomer mixture having a degree of polymerization (DP) of at least about 1.5. The present invention meets or exceeds the Food and Drug Administration (FDA) requirements for food contact with polyester and thus is useful in food contact applications, for example, beverage containers, and polyester film wrap.

### 2) Prior Art

Typically, waste polyester has uses in areas where color is not a concern, for example, as textile insulation, furniture padding, fiber fill, carpet fibers, etc., which enable the user to recycle any color or mixture of colors of waste polyester, and optionally apply pigments or dyes to mask any undesirable color. In this production process, the waste polyester is merely heated and re-extruded, as molten polyester, optionally using a vented extruder to remove moisture, and filtered to remove bits of metal, paper, etc. The optional pigment or dye may then be added prior to re-extruding as fiber for example. Applications where color is not a concern generally use 100% waste polyester.

It is also known to use waste post consumer product polyester in packaging applications, such as for beverages. These processes use methanolysis, hydrolysis, or glycolysis reactions to depolymerize the waste polyester to the monomer and then optionally filter and/or purify the monomer. The monomer may be then used as feedstock for polymerization with virgin raw materials, for example. These processes all require additional steps or materials that lead to an increase in cost. For example, if the waste is not purified then it has unacceptable color (except in limited applications, because the industry demands clear polyester so that the food is clearly visible). The unacceptable color may be overcome by the addition of color balancing additives.

In a methanolysis polyethylene terephthalate (PET) process, waste PET is reacted with methanol to produce the raw materials dimethyl terephthalate (DMT) and ethylene glycol (EG). These reaction products may be readily purified and thereafter used to produce virgin polyester (polyester formed from its raw materials). However, most commercial PET production facilities use terephthalic acid (TA) rather than DMT and therefore additional processing is required to convert the DMT to TA. The cost of methanol, the purification of DMT and EG, and the conversion of DMT to TA add cost to the process.

Hydrolysis of PET is reacting waste PET with water to depolymerize into TA and EG. However, it is known that certain types of contaminants generally present in waste PET are very difficult and expensive to remove from TA. This adds cost to the process.

Glycolysis of PET is reacting waste PET with glycol (such as EG) to produce the monomer bis-hydroxyethyl terephthalate (BHET) and other oligomers. This process has significant advantages over methanolysis or hydrolysis primarily because the BHET may be used as a raw material in either a DMT or TA polyester production process without significant major modification of the production facility. However, the BHET must be purified to produce clear, transparent polyester. The cost of glycol and the purification of BHET add to the total cost.

US Patent 2,933,476 to Fisher describes a continuous process for making PET by an ester-interchange reaction followed by a polycondensation reaction. In the ester-interchange reactor the raw materials DMT and EG are reacted catalytically to produce BHET and other low molecular weight oligomers. Upon completion of the ester-interchange reaction, from 10 to 30 percent of PET flake waste is mixed in a mixer with the BHET and other low oligomers. Then the entire molten mass is filtered before being pumped to a prepolymerizer, followed by a final polymerizer for the polycondensation reaction. The resultant polymer is filtered and pumped to an extruder to produce film or fiber. The problem the Fisher patent solves is using waste PET as a variable feed to the continuous polymerization process to maintain a constant inventory in the polymerizers independent of the output demand. This process adds no additional methanol, water or glycol, but does require additional reaction time (the residence time of the mixer), and uses non-transparent waste.

Japanese Patent 10-310,637 to Masao and Toshio discloses a terephthalic acid/ethylene glycol polyester production process that includes feeding molten waste into the esterifier along with the raw materials - terephthalic acid and ethylene glycol. In order to maintain the color, the antimony content of the waste must be less than 10 parts per million and the phosphorus less than 20 parts per million with germanium being the preferred catalyst. The depolymerization of the molten waste takes 1 hour, and the molten waste is added to the esterifier with the raw materials.

Indian Patent 158,902 dated February 11, 1987 discloses a batch polymerization in making polyester using dimethyl terephthalate and ethylene glycol. The waste is contacted with a prepolymer having a DP of 2 to 60. The waste is added in solid form.

There is a need in the art to provide an efficient and economical continuous process that does not require additional methanol, water, or glycol, requires no color balancing additives, requires no additional process steps, and requires no additional reaction time necessary to make polyester containing waste polyester.

There is a need in the art to produce transparent polyester having waste polyester therein that is applicable for food grade applications.

There is a need in the art to make clear polyester having up to 50 weight % recycled waste polyester that is useful for food grade applications and particularly clear bottles for the beverage industry, wherein the production process creates no color.

### SUMMARY OF THE INVENTION

The present invention concerns a process for making polyester containing up to 50 percent by weight transparent recycled waste polyester. Moreover, the present invention relates to a continuous process having an esterifier and two or more polymerizers. The equilibrium depolymerization process of the present invention does not require additional reaction time beyond that normally needed to produce virgin polyester. The depolymerization of the waste is controlled by introducing the waste into the esterifier in molten form, at any time after the contents of the esterifier have a DP of greater than about 1.5.

In the broadest sense, the present invention relates to a continuous process for making polyester containing transparent waste polyester comprising the steps of: 1) continuously providing a stream containing oligomers having a DP of at least about 1.5; 2) continuously feeding transparent polyester waste to an extruder; 3) continuously melting in said extruder said waste polyester; 4) continuously extruding said molten polyester into said stream containing oligomers; 5) continuously completing the esterification creating a prepolymer mixture; and 6) continuously polymerizing said prepolymer mixture thereby producing polyester containing waste transparent polyester suitable for food grade applications.

The polyester containing waste polymer is transparent and can be solid stated into a product suitable for injection molding into a bottle preform as is known in the art. The bottle preform can be stretch form blow molded into a plastic bottle useful as a container for soft drinks or water, as is known in the art.

### BRIEF DESCRIPTION OF THE DRAWING

A better understanding of the invention may be obtained from the drawing wherein:
Figure 1 is a graph of the molecular weight distribution, in daltons, for: 1) the oligomer mixture at the waste addition point, 2) the prepolymer leaving the esterifier, and 3) the waste polyester being fed to the esterifier.
Figure 2 is a graph of a comparison of the molecular weight distribution in daltons of the prepolymer leaving the esterifier, for the control having no waste polyester therein (virgin polyester), and that where 10 percent waste polyester has been added.
Figure 3 is a graph of a comparison of the molecular weight of the prepolymer leaving the esterifier, in daltons, for the control having no waste polyester therein (virgin polyester), and that where 20 percent waste polyester has been added.

### DETAILED DESCRIPTION OF THE PREFERRED EMBODIMENTS

Polyesters of the present invention are manufactured by a continuous process. A continuous process includes an esterifier and at least two polymerizers. The raw materials and any necessary catalysts are fed to the esterifier at a pressure of 0 - 5 bar and a temperature of between approximately 240 to 280 °C, with the continual removal of methanol or water depending on the starting raw materials. The reaction time in the esterifier is approximately from about 30 minutes to about 75 minutes, when a DP of at least about 1.5 is achieved. The molten waste polymer is now added to the esterifier and the reaction can be continued for about 75 minutes to about 90 minutes. This process does not increase the esterification reaction time over that of a conventional process having no waste addition. The reactants from the esterifier are continuously transferred to the first polymerizer (low polymerizer). The low polymerizer has a slight vacuum, preferably less than about 200 mm mercury absolute, and operates between approximately 240 to 300°C for approximately 30 to 75 minutes. Then the reactants are continuously transferred to one or more high polymerizers where the vacuum is increased to less than about 10 millimeter mercury absolute, preferably less than about 5 mm, and the temperature is approximately 260 to 300°C for approximately 45 minutes to 90 minutes.

Glycol is continuously removed from the single polymerization, or from the low and high polymerizers. Polycondensation catalysts such as antimony or titanium compounds are typically added with the raw materials or at the beginning stages of polymerization. The output (oligomer mixture) at the end of the esterifier is primarily BHET (and perhaps some monohydroxyethyl terephthalate (MHET) and other oligomers (such as dimers and trimers of BHET), and the degree of polymerization (DP) is at least about 1.5 and preferably 5 to 10.

Suitable polyesters are produced from the reaction of the diacid or diester component comprising at least 65 mole % terephthalic acid or C₁ - C₄ dialkylterephthalate, preferably at least 70 mole %, more preferably at least 75 mole %, even more preferably, at least 95 mole %; and a diol component comprising at least 65 mole % ethylene glycol, preferably at least 70 mole %, more preferably at least 75 mole %, even more preferably at least 95 mole %. It is also preferable that the diacid component is employed rather than the diester. The preferred components are TA, if a diacid is employed; DMT if a diester is employed; and EG for the diol component. The mole percent for all the diacid component totals 100 mole %, and the mole percentage for all the diol component totals 100 mole %.

Where the polyester components are modified by one or more diol components other than ethylene glycol, suitable diol components of the described polyesters may be selected from 1, 4-cyclohexanedimenthanol, 1,2-propanediol, 1,3-propanediol, 1,4-butanediol, 2,2-dimenthyl-1, 3-propanediol, 1,6-hexanediol, 1,2-cyclohexanediol, 1,4-cyclohexanediol, 1,2-cyclohexanedimethanol, 1,3-cyclohexanedimethanol, and diols containing one or more oxygen atoms in the chain, e.g., diethylene glycol, triethylene glycol, dipropylene glycol, tripropylene glycol or mixtures of these, and the like, In general, these diols contain 2 to 18, preferable 2 to 8 carbon atoms. Cycloaliphatic diols can be employed in their cis or transconfiguration or as mixtures of both forms. Preferred modifying diol components are 1,4-cyclohexanedimethanol or diethylene glycol, or a mixture of these.

Where the polyester components are modified by one or more acid components other than terephthalic acid, the suitable acid components (aliphatic, alicyclic, or aromatic dicarboxylic acids) of the linear polyester may be selected, for example, from isophthalic acid, 1,4-cyclohexanedicarboxylic acid, 1,3-cyclohexanedicarboxylic acid, succinic acid, glutaric acid, adipic acid, sebacic acid, 1,12-dodecanedioic acid, 2,6-naphthalenedicarboxylic acid, bibenzoic acid, or mixtures of these and the like. In the polymer preparation, it is often preferable to use a functional acid derivative thereof such as the diethyl, or dipropyl ester of the dicarboxylic acid. The anhydrides or acid halides of these acids as modifiers generally retard the crystallization rate compared to terephthalic acid. Accordingly, their use in making polyester is also well known in the art.

Also contemplated by the present invention is modified polyester made by reacting at least 65 mole % terephthalate from either terephthalic acid or dimethyl terephthalate with any of the above comonomers. Particularly contemplated is reacting about 97 - 98 mole % TA, 2 - 3 mole % isophthalic acid, and 100 mole % EG. The mole % of all diacids is 100 mole %, and the mole % of all diols is 100 mole %.

Conventional production of PET is well known in the art and comprises reacting TA with EG at a temperature of approximately 240 to 280 °C forming BHET, perhaps some MHET, and oligomers of these, and water. Because the reaction is reversible, water is continuously removed, driving the reaction to the production of BHET and low molecular weight oligomers. During the reaction of the terephthalic acid and ethylene glycol it is not necessary to have catalyst present. Next, the esterified mixture undergoes a polycondensation reaction to form the polymer. During the polycondensation reaction, a catalyst is preferred such as antimony (Sb) or titanium. Reacting diesters of dicarboxylic acids, such as DMT with EG is the other conventional process of making PET. In this process, catalyst such as zinc, cobalt, manganese and/or magnesium are used, and the temperature is in the range of about 240-280 °C forming methanol, BHET and other oligomers. Because the reaction is reversible, methanol is continuously removed, driving the reaction to the production of BHET. Thereafter, the reaction products undergo polycondensation. The manner of producing the polyester of the present invention by a conventional manner is acceptable for the present invention.

In making bottle performs and plastic bottles from the preforms, it is often desired to produce the cleanest, most transparent, polymer. Accordingly, the fewer additives employed, the more clear and transparent the polymer produced. On the other hand, it is sometimes desirable to make a colored transparent plastic bottle or bottles with other desired characteristics, and thus the use of a variety of conventionally known additives is also within the scope of the present invention. Accordingly, various pigments, dyes, branching agents, crystallization retarding agents, reheat agents and other typical agents may be added to the polymer generally during or near the end of the polycondensation reaction. The exact desired additives and the place on introduction in the reaction do not form a part of this invention and this technology is well known in the art. Any conventional system maybe employed and those skilled in the art can pick and choose among the various systems of introduction of additives to achieve the desired result.

Conventionally polyester, which is produced for bottles, is solid state polymerized to a higher IV. This process also reduces the residual acetaldehyde level in the resin. Solid state polymerization can be conducted in batch or continuous units. Solid state polymerization of bottle resin is well known to those skilled in the art.

The present invention takes transparent waste, preferable washed polyester obtained from the recycling of polyester bottles, introduces it into an extruder, heats the transparent waste polyester in the extruder until it is molten, and extrudes the molten transparent polyester into a stream containing an oligomer mixture. In a continuous process, the oligomer mixture stream is present during the later stage of operation of the esterifier. Optionally, a filter can be employed to filter any polymer gels, bits of paper or other non-polyester components that are present after the extrusion but before introduction into the oligomer mixture stream.

The present invention employs an extruder rather than a rotary valve to introduce the molten waste polyester into the oligomer mixture, because it prevents glycol vapor leakage and has sufficient pressure for the optional filtration. Molten waste polyester is employed because using flake or other solid form waste increase the residence time of the overall process - the residence time increases to permit the solid form to become molten. The melt temperature of the waste polyester is generally from about 265 to 285°C depending upon the polyester or copolyester being produced. It is preferred that the hopper containing the waste be purged with nitrogen to prevent oxygen ingress into the process. It is known that polyester has a moisture regain of about 1 weight %. Normally polyester polymer is dried prior to feeding into the extruder to prevent loss of molecular weight. By employing an extruder with the EDP of the present invention, the slight excess of moisture advantageously initiates partial depolymerization. The partially depolymerized molten scrap polyester can be extruded at lower temperatures and is easier to filter because it has a lower molecular weight. Drying prior to feeding may be required for certain extruder designs to maintain a uniform feed of molten waste. Optionally, a small amount of glycol (about 1 - 4 %) can be added to the molten waste polyester to achieve additional depolymerization, and reduce the extruder temperature. The partially depolymerized molten waste polyester has a low viscosity that aids its mixing with the oligomer mixture. Thus it is more economical because no additional components are necessary, it is not necessary to dry the waste, and there is no increase in residence time in the reactors. Less residence time is more economical, and there is less degradation of the resulting polymer.

A vented extruder has advantageous features for the present invention such as helping remove any solvents and volatiles in the molten waste, but it is not necessary. Thus the present invention can employ either vented or non-vented extruders. The extruder of the present invention can be any commercially available extruder. Optionally, a vacuum is applied to the vent to aid in removing volatile organic materials and any water from the molten waste. A filter or screen changer is also optional such that the molten waste passes through a continuous screen changer to remove any solid material such as paper, metal or other contaminants typically found in post-consumer PET flake. Any remaining volatile components will be removed during the high temperature, high vacuum polymerization process.

Currently the FDA and equivalent European organizations do not specify the degree of depolymerization required to be a tertiary recycling process. By extruding the waste polyester into a stream containing oligomer mixtures in the later stages of the esterifier, the reactions at these stages of the process control the degree of depolymerization. This may be particularly useful should the FDA or similar European regulations require that for food grade applications, the waste PET must be depolymerized below a specific molecular weight of, say, about 1000 daltons (a degree of polymerization (DP) of about 5). Therefore it is not necessary to depolymerize the waste polyester back to its raw materials. The present inventors recognized that the molten waste polyester introduced into a stream containing an oligomer mixture during esterification is always later subjected to the high vacuum and high temperature of the polymerizer. These conditions remove any solvents or volatiles that may not have been removed earlier in the process of the present invention, by the process conditions of extrusion, especially when it is vented/vacuum applied, and/or by filtering, for example, such that the output from the process of the present invention is suitable for food grade applications, as will be demonstrated later.

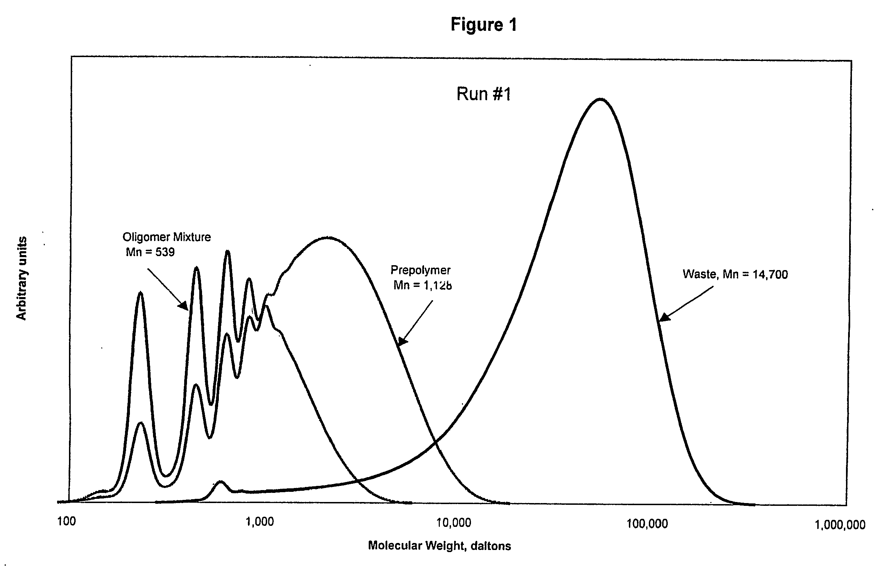

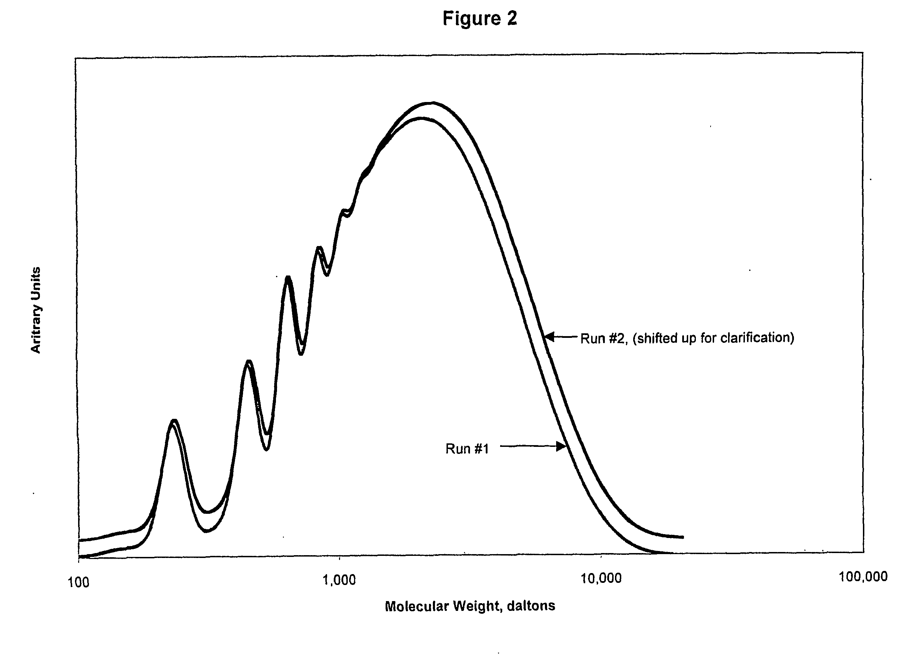

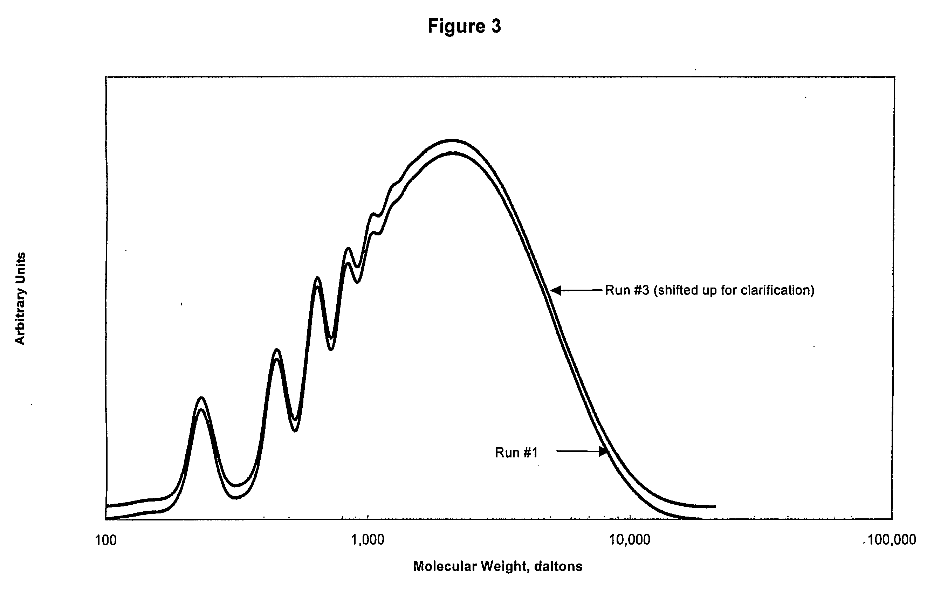

A feature of polycondensation polymers is that the molecular weight distribution will be the "most probable size distribution" (P.J. Flory Principles of Polymer Chemistry, Cornell University Press 1953). This is due to an interchange reaction between, for instance, a terminal hydroxyl group of one molecule and an interunit ester group of another. Without being bound by theory, it is believed that the molten waste rapidly depolymerizes through this interchange reaction to form the most probable size distribution. The presence of free glycol in the oligomer mixture will also aid in depolymerization of the molten waste. There is no evidence of the higher molecular weight species initially in the waste (Figure 1). Figures 2 and 3 illustrate that no additional reaction time is required in the secondary esterifier for this equilibrium depolymerization process to occur. A minimum secondary esterification time of 20 minutes has been estimated for the present invention.

The amount of waste transparent polyester waste may range up to about 50 percent weight of the polyester. Preferably the post consumer waste is washed, and has an impurities (labels, bottle caps, etc.) removed by floatation or by any similar process conventional in the art.

### TEST METHODS

Intrinsic viscosity (IV) is determined by heating 0.2 grams of the polymer composition in 20 milliliters of dichloroacetic acid until dissolved. The relative viscosity (RV) is measured at 25°C using an Ubbelhode viscometer. RV is converted to IV using the equation: IV = [(RV - 1) x 0.691] + 0.063.

The elemental metal content of the ground polymer samples was measured with an Atom Scan 16 ICP Emission Spectrograph. The sample was dissolved by heating in ethanolamine, and on cooling, distilled water was added. The solution was centrifuged, and the supernatant liquid analyzed.

The color of the polymer chips was determined by ASTM D 6290-98 using a Minolta Chroma-Meter CR-310 spectrophotometer, and reported as CIE L*, a* and b*. The haze of the preforms was also measured using this instrument.

The molecular weight distribution was measured with a Waters Gel Permeation Chromatograph. The solvent was trichloromethane/hexafluoro-2-propanol (97/3 v/v), and the column was calibrated with polystyrene standards.

### EXAMPLES

A continuous polymerization unit having a nominal throughput of 35 Kg/hr was used for all the trials. In order to simulate in a single esterifier the addition of waste polyester into an oligomer stream, having a DP of at least 1.5, the esterifier was separated into 2 stages, followed by low and high polymerizers.

### EXAMPLE 1

The unit was operated using an EG/TA ratio of 1.15. The recipe contained 2.3 wt % isophthalic acid (IPA) and utilized 220 ppm Sb as catalyst, and 35 ppm of Cobalt (Co) (cobalt acetate) and 35 ppm Phosphorus (P) (polyphosphoric acid). The waste flake was obtained from Nationwide (Polkton, North Carolina, USA) and contained 230 ppm Sb and 1.5 wt % IPA.

Five runs were conducted. Run 1 was the control having no waste polyester added, Run 2 contained 10% waste polyester, Runs 3, 4, and 5 contained 20% waste polyester. The waste was extruded through an electrically heated extruder, with no nitrogen purge in the hopper, and filtered using a 20-30-mesh filter. The molten waste was introduced into the inlet of the second stage of the esterifier, where the oligomer DP was 2.5. Additional Co was added to runs 4 and 5. The residence time in the second stage was 75 min. and the temperature was 270° C, resulting in a prepolymer DP of 5.5. This prepolymer was polymerized. The results are set forth in Table 1.

**Table 1**

| Run No. | Description | Co ppm | IV | L* | a* | b* |
|---|---|---|---|---|---|---|
| 1 | Control | 35 | 0.634 | 55.8 | -0.3 | -0.3 |
| 2 | 10% Flake | 35 | 0.637 | 56.2 | -1.1 | 2.1 |
| 3 | 20% Flake | 35 | 0.634 | 56.0 | -1.6 | 3.7 |
| 4 | 20% Flake | 50 | | 54.3 | -1.2 | 2.6 |
| 5 | 20% Flake | 65 | | 54.2 | -1.0 | 1.8 |

The molecular weight distribution (MWD) of the material exiting the first stage, second stage and the waste are shown in Figure 1 for Run 1. Figures 2 and 3 show the MWD of the prepolymer exiting the second stage for Runs 2 and 3. Figures 2 and 3 show that the waste has been depolymerized and had no effect on the MWD of the prepolymer, i.e. the equilibrium MWD was maintained.

Additionally the resins from all runs were solid state polymerized to a target IV of 0.835. The resins were injection molded into a 27.2 gram preforms at 520° F. The preforms were heated to about 100 -120° C and blow molded into 20 ounce contour bottles at a stretch ratio of about 12.5. All bottles had good color and minimal IV loss, well within acceptable ranges of commercially available resins. Acetaldehyde testing was performed on these bottles and no significant difference in results was obtained.

### EXAMPLE 2

This example used the same process conditions as Example 1, with a target IV of 0.635. The waste material was supplied by UltrePET LLC (Albany, New York, USA) both in pellet and flake form. This material contained 2.3 wt. % IPA and 230 ppm Sb. For the controls, virgin PET (KoSa T86) was used as a waste feedstock. All runs contained 35 ppm Co, except run 11 in which it was 50 ppm. The results are set forth in Table 2.

**Table 2**

| Run No. | % Waste | Type Waste | L* | a* | b* |
|---|---|---|---|---|---|
| 6 Control | 10 | T 86 | 54.9 | -0.4 | -0.6 |
| 7 Control | 35 | T86 | 52.9 | -0.6 | 0.2 |
| 8 | 20 | Flake | 53.6 | -1.1 | 0.8 |
| 9 | 20 | Pellets | 53.9 | -1.0 | 0.9 |
| 10 | 35 | Pellets | 52.2 | -1.4 | 1.8 |
| 11 | 35 | Pellets | 53.0 | -1.1 | 1.1 |

These runs illustrate that the depolymerization process does not add color to the final product, and the form of the waste material does not impact the color of the polymer.

### EXAMPLE 3

In this example the oligomer mixture was prepared using EG/DMT at a mole ratio of 3.7 using manganese acetate (75 ppm Mn) as the ester interchange catalyst. The Sb level was 358 ppm and 2.5 wt. % IPA added, and the target polymer IV was 0.635. Two types of waste pellets from CeDo Recycling (Beek, The Netherlands) were used, a clear and a blue (which contained up to 50% of blue/green bottle waste). Additional Co was added to runs 14 - 16 to control the final polymer color. The oligomer DP at the waste injection point was 2.5. The results are set forth in Table 3.

**Table 3**

| Run No. | % Waste | Waste Type | Co ppm | L* | a* | b* |
|---|---|---|---|---|---|---|
| 12 | 0 | | 23 | 63.8 | -0.8 | 0.0 |
| 13 | 20 | T 86 | 23 | 63.2 | -1.0 | 0.4 |
| 14 | 20 | Clear | 44 | 59.6 | -1.2 | 1.2 |
| 15 | 20 | Blue | 35 | 55.7 | -2.6 | 1.9 |
| 16 | 30 | Clear | 60 | 57.3 | -0.8 | 0.4 |

Additionally the resins from all runs were solid state polymerized to a target IV of 0.835. The resins were injection molded into a 27.2 gram preforms at 520° F. The preforms were heated to about 100 -120° C and blow molded into 20 ounce contour bottles at a stretch ratio of about 12.5. There was no significant difference in the bottle physical properties, or acetaldehyde level, between the runs. The color data for the preforms are set forth in Table 4.

**Table 4**

| Run No. | Haze, % | L* | a* | b* |
|---|---|---|---|---|
| 12 | 7.4 | 87.8 | -0.4 | 1.8 |
| 13 | 9.4 | 90.5 | -0.4 | 1.5 |
| 15 | 11.2 | 88.0 | -1.2 | 3.5 |
| 16 | 10.6 | 88.9 | -0.6 | 2.4 |

Even run 15, in which 20% of a blue/green waste was used, met the industry standard for preform yellowness, b*, of less than 6, and haze of less than 15%. The bottles were visually acceptable with respect to color and transparency.

### EXAMPLE 4

In order to demonstrate that this process will produce a resin suitable for food contact, the FDA guidelines were used. The FDA recommends (Points to Consider for the Use of recycled Plastics in Food Packaging: Chemistry Considerations) that benzophenone be used as a nonvolatile polar contaminant and toluene as a volatile nonpolar contaminant.

Using a batch DMT process, ground polyester bottles were added, together with 1000 ppm benzophenone and 1000 ppm toluene based on the amount of recycle waste, after the ester interchange reaction, prior to polycondensation. The recycled polyester was added at a 10% and 35% level. The resultant polyester was analyzed for benzophenone and toluene. At both the 10% and 35% recycle content these contaminants were found to be below the level of detection, 0.1 ppm. This is well below the 0.215 ppm impurity threshold level established (FDA) for the use of post consumer waste in food packaging applications. Using this procedure for a continuous process should yield similar results.

Thus it is apparent that there has been provided, in accordance with invention, a process that fully satisfies the objects, aims, and advantages set forth above. While the invention has been described in conjunction with specific embodiments thereof, it is evident that many alternatives, modifications, and variations will be apparent to those skilled in the art in light of the foregoing description. Accordingly, it is intended to embrace all such alternatives, modifications and variations as fall within the spirit and broad scope of the present invention.

## Claims

1. In a process for making food grade polyester containing transparent waste polyester, comprising: continuously providing a stream containing oligomers having a DP of at least about 1.5, continuously feeding transparent polyester waste to an extrudes continuously melting said transparent polyester waste in said extruder; continuous extruding said molten polyester waste into said stream containing oligomers creating an prepolymer, and continuously polymerizing said prepolymer to produce transparent food grade polyester.

2. The process of claim 1, wherein said polyester waste is from post consumer recycle products, or production waste, or a combination thereof,

3. The process of claim 1, wherein said step of melting said polyester waste includes a venting step for venting solvents or some volatiles from said molten polyester waste.

4. The process of claim 3, wherein said venting includes a vacuum step.

5. The process of claim 1, wherein said molten polyester comprises up to 50 wt. % of said polyester.

6. The process of claim 1, including the additional step of filtering said molten polyester before said extruding step.

7. The process of claim 1, wherein said polyester waste is dried prior to feeding.

8. The process of claim 1, wherein said feeding is conducted under a nitrogen atmosphere.

9. The process of claim 1, wherein said step of melting includes the step of adding glycol to said molten polyester waste.

10. The process of claim 1, wherein said stream containing oligomers is from the late stages of an esterification reaction in a single esterifier.

11. The process of claim 1, wherein said polyester containing waste undergoes solid-state polymerization to form a product.

12. The process of claim 11, wherein said product undergoes injection molding into a preform.

13. The process of claim 1, wherein said polyester containing waste undergoes injection molding into a preform.

14. The process of claim 12 or 13, wherein said preform undergoes stretch blow-molding into a bottle.

## Patentansprüche

1. Verfahren zur Herstellung von Lebensmittelqualität aufweisendem Polyester, der transparente Polyesterabfälle enthält, bei dem man kontinuierlich einen Strom bereitstellt, der Oligomere mit einem DP von mindestens etwa 1,5 enthält; transparente Polyesterabfälle kontinuierlich einem Extruder zuführt; die transparenten Polyesterabfälle kontinuierlich in dem Extruder schmilzt; die schmelzflüssigen Polyesterabfälle kontinuierlich in einen Oligomere enthaltenden Strom extrudiert, wobei man ein Prepolymer erhält, und das Prepolymer kontinuierlich zu transparentem Polyester mit Lebensmittelqualität polymerisiert.

2. Verfahren nach Anspruch 1, bei dem die Polyesterabfälle aus Post-Consumer-Recycling-Produkten oder Produktionsabfällen oder einer Kombination davon stammen.

3. Verfahren nach Anspruch 1, bei dem der Schritt des Schmelzens der Polyesterabfälle einen Entgasungsschritt zum Ablassen von Lösungsmitteln oder flüchtigen Substanzen von den schmelzflüssigen Polyesterabfällen einschließt.

4. Verfahren nach Anspruch 3, bei dem das Entgasen einen Vakuumschritt einschließt.

5. Verfahren nach Anspruch 1, bei dem der schmelzflüssige Polyester bis zu 50 Gew.-% des Polyesters ausmacht.

6. Verfahren nach Anspruch 1 mit dem zusätzlichen Schritt des Filtrierens des schmelzflüssigen Polysters vor dem Extrusionsschritt.

7. Verfahren nach Anspruch 1, bei dem man die Polyesterabfälle vor dem Zuführen trocknet.

8. Verfahren nach Anspruch 1, bei dem man das Zuführen unter Stickstoffatmosphäre durchführt.

9. Verfahren nach Anspruch 1, bei dem der Schritt des Schmelzens den Schritt der Zugabe von Glykol zu den schmelzflüssigen Polyesterabfällen einschließt.

10. Verfahren nach Anspruch 1, bei dem der Oligomere enthaltende Strom aus den späten Stufen einer Veresterungsreaktion in einer einzigen Veresterungsvorrichtung stammt.

11. Verfahren nach Anspruch 1, bei dem die polyesterhaltigen Abfälle eine Festphasenpolymerisation zur Bildung eines Produkts durchlaufen.

12. Verfahren nach Anspruch 11, bei dem man das Produkt zu einer Vorform spritzgießt.

13. Verfahren nach Anspruch 1, bei dem man die polyesterhaltigen Abfälle zu einer Vorform spritzgießt.

14. Verfahren nach Anspruch 12 oder 13, bei dem man die Vorform zu einer Flasche streckblasformt.

## Revendications

1. Procédé de fabrication de polyester de qualité alimentaire contenant des déchets de polyester transparent, comprenant les étapes consistant à : mettre en oeuvre en continu un courant contenant des oligomères ayant un de gré de polymérisation (DP) d'au moins environ 1,5, acheminer en continu des déchets de polyester transparent à une extrudeuse ; fondre en continu lesdits déchets de polyester transparent dans ladite extrudeuse ; extruder en continu lesdits déchets de polyester fondus pour former ledit courant contenant des oligomères en créant un prépolymère et polymériser en continu ledit prépolymère pour produire du polyester transparent de qualité alimentaire.

2. Procédé selon la revendication 1, dans lequel lesdits déchets de polyester proviennent de produits de recyclage de post-consommation ou de déchets de production ou d'une combinaison des deux.

3. Procédé selon la revendication 1, dans lequel ladite étape de fusion desdits déchets de polyester comprend une étape d'échappement pour décharger des solvants ou certaines substances volatiles desdits déchets de polyester fondus.

4. Procédé selon la revendication 3, dans lequel ledit échappement comprend une étape de vide.

5. Procédé selon la revendication 1, dans lequel ledit polyester fondu comprend jusqu'à 50 % en poids dudit polyester.

6. Procédé selon la revendication 1, comprenant l'étape supplémentaire de filtrage dudit polyester fondu avant ladite étape d'extrusion.

7. Procédé selon la revendication 1, dans lequel lesdits déchets de polyester sont séchés avant d'alimenter l'extrudeuse.

8. Procédé selon la revendication 1, dans lequel ladite alimentation est effectuée sous atmosphère d'azote.

9. Procédé selon la revendication 1, dans lequel ladite étape de fusion comprend l'étape d'addition de glycol auxdits déchets de polyester fondus.

10. Procédé selon la revendication 1, dans lequel ledit courant contenant des oligomères provient des tout derniers stades d'une réaction d'estérification dans un système d'estérification unique.

11. Procédé selon la revendication 1, dans lequel lesdits déchets contenant du polyester subissent une polymérisation à l'état solide pour former un produit.

12. Procédé selon la revendication 11, dans lequel ledit produit subit un moulage par injection pour obtenir une préforme.

13. Procédé selon la revendication 1, dans lequel lesdits déchets contenant du polyester subissent un moulage par injection pour obtenir une préforme.

14. Procédé selon la revendication 12 ou la revendication 13, dans lequel ladite préforme subit un moulage par extrusion-soufflage-étirage pour obtenir une bouteille.
